# EUROPEAN PATENT SPECIFICATION

(11) **EP 2 268 789 B1**
(45) Date of publication and mention of the grant of the patent: **06.11.2024**
(21) Application number: 09730171.7
(22) Date of filing: 08.04.2009
(51) Int. Cl.: C12M 1/34, C12Q 1/00, G02B 21/34, G01N 15/14

(54) **SYSTEMS AND METHODS FOR COUNTING CELLS AND BIOMOLECULES**
SYSTEME UND VERFAHREN ZUM ZÄHLEN VON ZELLEN UND BIOMOLEKÜLEN
SYSTÈMES ET PROCÉDÉS POUR COMPTER DES CELLULES ET DES BIOMOLÉCULES

(30) Priority: 09.04.2008 US 123407 P; 09.04.2008 US 123424 P; 09.04.2008 US 123426 P; 09.04.2008 US 123409 P; 09.04.2008 US 123421 P; 09.04.2008 US 123425 P; 16.03.2009 US 404803
(43) Date of publication of application: 05.01.2011
(73) Proprietor: Nexcelom Bioscience, Lawrence, MA 01843 (US)
(72) Inventor: LIN, Bo, Lexington MA 02420 (US); LI, Peter, Andover MA 01810 (US); QIU, Jean, Andover MA 01810 (US); SMITH, Timothy, Dracut MA 01826 (US); SOBOLEWSKI, Todd, Windham NH 03087 (US); PIRANI, Alnoor, Allston MA 02124 (US)
(74) Representative: Ter Meer Steinmeister & Partner
(86) International application number: PCT/US2009/039863
(87) International publication number: WO 2009/126685

(56) References cited:
- US-A- 5 124 141
- US-A1- 2003 210 262
- US-A1- 2003 231 791
- US-A1- 2003 235 563
- US-A1- 2004 145 805
- US-A1- 2004 265 889
- US-A1- 2005 270 640
- US-A1- 2006 187 442
- US-B1- 6 709 864
- MCCRONE E L ET AL: "Fluorescent staining for leukocyte chemotaxis", JOURNAL OF IMMUNOLOGICAL METHODS, ELSEVIER SCIENCE PUBLISHERS B.V.,AMSTERDAM, NL, vol. 114, no. 1-2, 10 November 1988 (1988-11-10), pages 79 - 88, XP023974238, ISSN: 0022-1759, [retrieved on 19881110], DOI: 10.1016/0022-1759(88)90157-3
- MALVIN GARY M. ET AL: "Effects of capillary red cell density on gas conductance of frog skin", J APPL PHYSIOL, 1 July 1992 (1992-07-01), pages 224 - 233, XP055907963, Retrieved from the Internet <URL:https://doi.org/10.1152/jappl.1992.73.1.224O>
- MATHUR JAIDEEP ET AL: "PEG-mediated protoplast transformation with naked DNA", 1 January 1998, ARABIDOPSIS PROTOCOLS (IN: METHODS IN MOLECULAR BIOLOGY), HUMANA PRESS, TOTOWA, NJ, US, PAGE(S) 267 - 276, ISBN: 978-0-89603-391-7, XP009144315

## Description

### Technical Field

The present invention generally relates to systems and methods for counting cells and biomolecules.

### Background

Detection, identification, quantification, and characterization of biomolecules or cells of interest, such as stem cells or cancer cells, through testing of biological samples is an important aspect in the fields of medical diagnostics and medical research. Biological solutions, such as blood, spinal fluid, cell culture and urine, are routinely analyzed for their microscopic particle concentrations.

As an example, for determining cell concentrations in biological solutions, a commonly used method is to spread a cell-containing solution into a thin layer without cell overlap in the vertical direction. A precise volume is determined by keeping the height of the solution at a known constant level. Cells are viewed under an optical microscope and enumerated in defined areas. To eliminate the variation caused by microscopes, an area-defining grid is preferred in the counting chamber. A commonly used cell counting device is called hemacytometer, as disclosed in Risch (U.S. patent number 1,693,961) and Hausser et al. (U.S. patent number 2,039,219).

More recently, cell counting has been accomplished using flow cytometry, a technique for counting, examining, and sorting microscopic particles suspended in a stream of fluid. A beam of light, e.g., laser light, of a single wavelength is directed onto a hydro-dynamically focused stream of fluid. A number of detectors are aimed at a point where the stream passes through the light beam; one in line with the light beam and several perpendicular to it. Each suspended particle passing through the beam scatters the light in some way, and fluorescent chemicals found in the particle or attached to the particle may be excited into emitting light at a higher wavelength than the light source. This combination of scattered and fluorescent light is picked up by the detectors, and by analyzing fluctuations in brightness at each detector it is then possible to derive various types of information about the physical and chemical structure of each individual particle. Some flow cytometers on the market have eliminated the need for fluorescence and use only light scatter for measurement. Other flow cytometers form images of fluorescence, scattered light, and transmitted light for each cell. In addition to prohibitive cost ($150,000 to $500,000) for a flow cytometry system, there are many technical problems associated with flow cytometry. For example, many technical problems result from cells clumping and clogging or sticking in the nozzle of the flow cytometer, causing the stream of fluid to deflect and become misaligned with the optics. Also, resulting aerosolization of the sample prevents biohazardous samples, e.g. human blood cells potentially infected with HIV or hepatitis virus, from being sorted unless stringent precautions are taken.

Further, flow cytometry can only provide an indirect measure of cell concentration and cell size. Flow cytometry relies on mixing a sample with a known concentration of beads, determining the number of beads that pass the detector in the flow cytometer, and correlating the bead count with the number of cells that pass the detector to determine the concentration of cells in the sample.

US 2003/210262 A1 relates to a slide viewer capable of simultaneous display of more than one scan of an area of interest of a slide, wherein the slide viewer includes a database containing at least two data files representing different scans for a same area of interest on one or multiple correlated slides or at least two different digital presentations of the same scan.

US 2006/187442 A1 relates to device for counting micro particles, wherein the device comprises a light source; a chip containing micro particles; an object lens; a CCD camera; a counting part; and a shifter for shifting the position of the chip. McCrone et al.: "Fluorescent staining for leukocyte chemotaxis", Journal of Immunological Methods, Elsevier Science Publishers B.V., Amsterdam, NL, vol. 114, no. 1-2, 10 November 1988, pages 79-88 relates to a fluorescent method of staining eosinophils in chemotactic filters, wherein a neutral solution of aniline blue yields bright green fluorescent staining of the cytoplasmic granules of eosinophils. Mathur Jaideep et al: "PEG-mediated protoplast transformation with naked DNA", 1 January 1998; Arabidopsis Protocols, Human Press; Totowa, NJ, US, pages 267-276 relates to method wherein light-emitting enzymes are being used as reporter proteins in nondestructive in vivo gene expression assays.

There is an unmet need for efficient and cost-effective systems and methods for counting biomolecules and cells.

### Summary

The present invention overcomes problems associated with flow cytometry by providing a cell counting system that takes images of a static population of cells in a sample that has been loaded into a chamber having a fixed height. Because the system utilizes a covered chamber having a fixed height, cell concentration can be determined from the cell count. Further, systems of the invention can provide a direct measurement of cell concentration and cell size without the need for beads, as is required in flow cytometry. The present invention provides capability for detecting, identifying, quantifying, and characterizing cells of interest without many of the technical problems associated with flow cytometry, and for significantly less costs.

A cell counting system of the invention is defined in claim 1 .

The systems can be operably connected to a computer having cell counting analysis software installed on it. The fluorescent light beam and/or the bright-field light beam narrowing devices can be collimators. The fluorescent light source and the bright-field light source can be light emitting diodes. The detection device can be a camera, for example a charge-coupled device or CCD camera which may include a thermoelectric cooling capacity. The covered chamber can include a sample introduction port and an air escape port and a counting grid. In certain embodiments, the counting grid is an integral part of a top of the chamber. Alternatively, the counting grid is an integral part of a bottom of the chamber. The width of lines of the counting grid can range from about 0.1 micrometer to about 1 mm. The width of lines of the counting grid can range from about 1 micrometer to about 25 micrometer. The thickness of lines of the counting grid can range from about 0.1 micrometer to about 50 micrometer.

The system can be configured to capture the entirety of the sample with a single image. Alternatively, the system can be configured to capture a portion of the sample with a single image.

The sample can be a human or animal tissue or body fluid or a sample originated from a plant or living organism. For example, the sample can be serum, cell culture supernatant, or cell lysis.

The biomolecules can be DNA, RNA, or protein. The biomolecule or cell can be indicative of a disease or disease state. Described herein is a method for determining a concentration or number count of cells that express a biomarker in a population of cells in a sample including: contacting a sample comprising cells that express a biomarker with a fluorescently labeled agent that specifically binds the biomarker; loading the sample into a covered chamber having a known height, in which the population of cells is suspended within the chamber; acquiring a single static bright-field image of the population of cells in the sample in the chamber; acquiring a single static fluorescent image of the population of cells in the sample in the chamber; and comparing cell count from the bright-field image to cell count from the fluorescent image to determine the concentration or number count of the cells that express the biomarker in the population of cells. Another aspect of the invention is the method as defined in claim 4. Prior to the loading step, the method can further include contacting the population of cells with an agent that makes the population of cells permeable.

The biomarker can be a cell surface biomarker. Alternatively, the biomarker can be an intercellular biomarker. The fluorescently labeled agent can be a fluorescently labeled antibody that possesses an epitope for the biomarker. The biomarker can be associated with a particular disease or disease state. Described herein is a method for determining a concentration or number count of stem cells in a population of cells in a sample including: contacting a sample including stem cells with a fluorescently labeled agent that specifically binds the stem cells in the sample; loading the sample into a covered chamber having a known height, in which the population of cells is suspended within the chamber; acquiring a single static bright- field image of the population of cells in the sample in the chamber; acquiring a single static fluorescent image of the population of cells in the sample in the chamber; and comparing cell count from the bright-field image to cell count from the fluorescent image to determine the concentration or number count of stem cells in the population of cells.

The fluorescently labeled agent can be a fluorescently labeled antibody specific for a stem cell biomarker, or a particle coated with a fluorescently labeled antibody specific for a stem cell biomarker. Exemplary stem cell biomarkers include TRA-1-81, TRA-1-60, Thy-1, SSEA-3, SSEA4, Oct-4, CD9, CD30, and alkaline phosphatase.

Described herein is a method for determining infection rates of malaria including: contacting a sample of red blood cells from a subject having malaria with a fluorescently labeled agent specific for the malaria parasite; loading the sample into a covered chamber having a known height, in which the cells are suspended within the chamber; acquiring a single static bright-field image of the cells in the sample in the chamber; acquiring a single static fluorescent image of the cells in the sample in the chamber; and comparing cell count from the bright-field image to cell count from the fluorescent image to determine the infection rate of malaria in the subject.

Described herein is a method for identifying adipocytes in a sample including: contacting a sample including adipocytes with a fluorescently labeled agent that specifically binds the adipocytes; loading the sample into a covered chamber having a known height, in which the cells are suspended within the chamber; acquiring a single static bright-field image in the chamber of the sample; acquiring a single static fluorescent image in the chamber of the sample; and comparing the bright-field image to the fluorescent image to identify the adipocytes.

Described herein is a method for detecting a biomolecule in a sample including: contacting a sample with particles coated with a biotinylated antibody, and streptavidin coupled to a fluorescent indicator; loading the sample into a covered chamber having a known height, in which the biomolecules are suspended within the chamber; acquiring a single static bright-field image of the sample in the chamber; acquiring a static fluorescent image of the sample in the chamber; and comparing the bright- field image to the fluorescent image to detect the biomolecule in the sample. Prior to acquiring the bright-field image, the method can further include washing unbound particles. The biomolecule can be associated with a particular disease or disease state.

Described herein is a method, not part of the present invention, for determining a concentration or number count of viable hepatocytes in a population of hepatocytes in a sample including: contacting a sample including hepatocytes with at least one fluorescently labeled agent; loading the sample into a covered chamber having a known height, in which the population of hepatocytes is suspended within the chamber; acquiring two or more static images of the population of hepatocytes, in which the first and second image are selected from the group consisting of a bright- field image, a fluorescent image of viable hepatocytes, and a fluorescent image of dead hepatocytes, in which the first image is different from the second image; comparing cell count from the first image to cell count from the second image to determine the concentration or number count of viable hepatocytes in the population of hepatocytes.

The population of hepatocytes can be contacted with two different fluorescent agents. A first fluorescent agent specifically binds viable hepatocytes, and a second fluorescent agent specifically binds dead hepatocytes. The first fluorescent agent can be acridine orange and the second fluorescent agent can be propidium iodine. The first image can be the fluorescent image of live hepatocytes, the second image can be the fluorescent image of dead hepatocytes, and the concentration of viable hepatocytes in the population of hepatocytes can be determined by comparing cell count from the fluorescent image of live hepatocytes to cell count from the fluorescent image of dead hepatocytes. Alternatively, the first image can be the bright-field image, the second image can be the fluorescent image of dead hepatocytes, and the concentration of viable hepatocytes in the population of hepatocytes can be determined by comparing cell count from the bright-field image to cell count from the fluorescent image of dead hepatocytes. Alternatively, the first image can be the bright-field image, the second image can be the fluorescent image of live hepatocytes, and the concentration of viable hepatocytes in the population of hepatocytes can be determined by comparing cell count from the bright-field image to cell count from the fluorescent image of live hepatocytes.

In these methods, each of the single static bright- field image and the single static fluorescent image can be an image of the entire sample. Alternatively, each of the single static bright-field image and the single static fluorescent image can be an image of a portion of the sample. A single image refers to a non-scanning image. A single image includes multiple images of the same frame to be used for analysis, e.g., for obtaining an average.

### Brief Description of the Drawings

FIG. 1 is a schematic diagram of an embodiment of a cell counting and analysis system of the invention.
FIG. 2 is a drawing of an embodiment of an exemplary system with design details of certain components.
FIG. 3 is a drawing of an embodiment of an exemplary system depicting the bright-field and fluorescent light sources, collimators, and filter assemblies for fluorescent detection.
FIG. 4 is a drawing depicting certain components of an exemplary system.
FIG. 5 is a drawing depicting certain components of an exemplary system. FIG. 6 is a picture showing hepatocytes stained with trypan blue.
FIG. 7 is a picture showing fluorescently stained hepatocytes.
FIG. 8 is another picture showing fluorescently stained hepatocytes.
FIG. 9 is another picture showing fluorescently stained hepatocytes.
FIG. 10 is a picture showing hepatocytes imaged under bright-field.
FIG. 11 is another picture showing fluorescently stained hepatocytes.
FIG. is another picture showing fluorescently stained hepatocytes.
FIG. 13 is a picture showing hepatocytes that have been magnified and imaged under bright-field.
FIG. 14 is a picture showing hepatocytes that have been magnified and fluorescently imaged.

### Detailed Description

The biological mechanisms of many diseases have been clarified by microscopic examination of tissue samples or body fluids. Histopathological examination has also permitted the development of effective medical treatments for a variety of illnesses. In standard anatomical pathology, a diagnosis is made on the basis of cell morphology and staining characteristics. Tumor samples, for example, can be examined to characterize the tumor type and suggest whether the patient will respond to a particular form of chemotherapy. Microscopic examination and classification of tissue samples stained by standard methods (such as hematoxylin and eosin) has improved cancer treatment significantly.

Recent advances in molecular medicine have provided an even greater opportunity to understand the cellular mechanisms of disease, and select appropriate treatments with the greatest likelihood of success. For example, some hormone dependent breast tumor cells have an increased expression of estrogen receptors indicating that the patient from whom the tumor was taken will likely respond to certain anti-estrogen drug treatments. Other diagnostic and prognostic cellular changes include the presence of tumor specific cell surface antigens (as in melanoma), the production of embryonic proteins (such as carcinoembryonic glycoprotein antigen produced by gastrointestinal tumors), and genetic abnormalities (such as activated oncogenes in tumors). A variety of techniques have evolved to detect the presence of these cellular abnormalities, including immunophenotyping with monoclonal antibodies, in situ hybridization using nucleic acid probes, and DNA amplification using the polymerase chain reaction (PCR).

Effective use of such biomarkers in assisting in the diagnosis and identification of an effective therapeutic regimen has been impeded by the inability of current automated analysis systems to utilize and identify the varied biomarkers in a cost efficient, time sensitive, and reproducible manner. Thus, previous techniques and systems have often proven inadequate for the efficient analysis of tissue samples requiring a rapid parallel analysis of a variety of independent microscopic, histologic and/or molecular characteristics.

Additionally, manual methods can be extremely time consuming and can require a high degree of professional training to identify and/or quantify cells. This is not only true for tumor cell identification and detection, but also for other applications ranging from neutrophil alkaline phosphatase assays, reticulocyte counting and maturation assessment, and others. The associated manual labor leads to a high cost for these procedures in addition to the potential errors that can arise from long, tedious manual examinations.

The present invention provides capability for detecting, identifying, quantifying, and characterizing cells and biomolecules of interest. The present invention generally relates to systems and methods for counting cells and biomolecules in a sample. A sample includes biological materials obtained from or derived from a living organism. Typically the sample will include cells, tissue, or biomolecules, such as proteins, polynucleotides (e.g., DNA or RNA), organic material, and any combination of the foregoing. Such samples include, but are not limited to, hair, skin, tissue, cultured cells, cultured cell media, and body fluids.

A tissue is a mass of connected cells and/or extracellular matrix material, e.g., CNS tissue, neural tissue, eye tissue, liver tissue, placental tissue, mammary gland tissue, gastrointestinal tissue, musculoskeletal tissue, genitourinary tissue, and the like, derived from, for example, a human or other mammal and includes the connecting material and the liquid material in association with the cells and/or tissues. A body fluid is a liquid material derived from, for example, a human or other mammal. Such body fluids include, but are not limited to, blood, plasma, serum, serum derivatives, bile, phlegm, saliva, sweat, amniotic fluid, mammary fluid, and cerebrospinal fluid (CSF), such as lumbar or ventricular CSF. A sample also may be media containing cells or biological material.

Systems of the invention can also be used to interrogate cell lines. Cell lines refer to specific cells that can grow indefinitely given the appropriate medium and conditions. Systems of the invention can be used to interrogate any type of cell line. Cell lines can be mammalian cell lines, insect cell lines or plant cell lines. Exemplary cell lines can include tumor cell lines or stem cell lines.

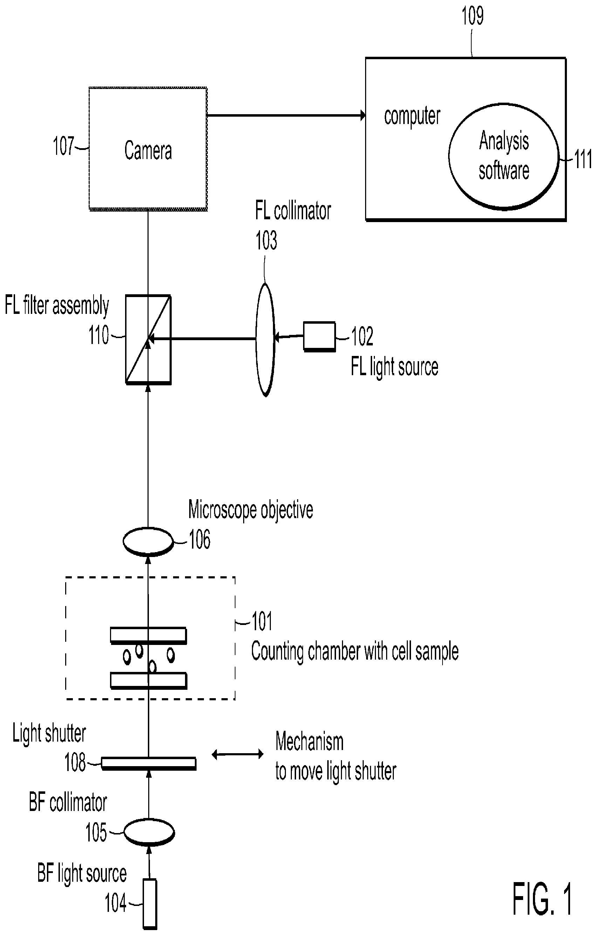

Referring to FIG. 1, provided is a schematic diagram of an embodiment of a cell counting system **100** of the invention. Counting system **100** includes a covered counting chamber **101** having a known height and configured to hold a suspension of biomolecules or cells in a liquid sample. Because the counting chamber has a known height, there is a known amount under interrogation, and a concentration of cells in the sample can be determined by calculating the area under interrogation with the known height of the chamber (which together define a volume of the sample under interrogation). An exemplary counting chamber, and methods of making such a chamber is shown in Qiu (U.S. patent application number 2004/0145805). The chamber can include a sample introduction port and an air escape port for ease of loading the chamber. The chamber can also include a counting grid for focusing and ease of cell. Exemplary counting grids are shown in Qiu (U.S. patent number 7,329,537 and U.S. patent application number 2004/0145805).

The cell counting system **100** further includes at least one fluorescent light (FL) source **102** connected to at least one fluorescent light beam narrowing device **103.** The system **100** also includes a bright-field (BF) light source **104** connected to a bright-field light beam narrowing device **105.** The fluorescent light source and the bright-field light source can be a light emitting diode. The fluorescent light beam narrowing device and the bright-field light beam narrowing device can be a collimator.

The cell counting system **100** further includes a microscope objective **106,** a detection device **107,** and a movable light shutter **108.** The detection device can be camera, such as a CCD camera, for acquiring images. The camera can be fitted with a cooling capability. In certain embodiments, microscope objective movements are under the control of a computer **109** operably connected to the system **100.** In other embodiments, the microscope objective is fixed.

The system **100** further includes a fluorescent filter assembly **110** to allow excitation light from the fluorescent light source **102** to illuminate the sample in the chamber **101,** and to allow emission light from the sample to be imaged by the detection device **107.** The system **100** also includes a movable light shutter **108** to block bright-field light during fluorescent detection. The counting chamber **101** has a known height that may be pre-selected, adjusted, or fixed. The counting chamber **101** is covered or otherwise closed such that the suspension of sample therein would not lose volume due to evaporation. The chamber **101** is loaded with a sample by pipetting the sample into the sample introduction port of the chamber **101.** As the sample is loaded into the chamber, air escapes the chamber **101** through the air escape port in the chamber **101.** An exemplary sample size is 20 µl. Once the chamber **101** is loaded with the sample, the chamber **101** is loaded into the counting system **100** through a slot in a housing of the system.

Once an image is taken, the sample volume under interrogation can be obtained from the height of the counting chamber, and the area of the sample that is imaged. Thus, the interrogated sample volume can be obtained and is known for each image taken. It should be noted that the chamber height may be varied from application to application as long as the interrogated sample volume can be obtained or is known.

System **100** is configured for bright-field imaging and fluorescent images of the sample in the chamber **101.** The components of the cell counting system **100** are encased in a housing. The bright-field light source **104** is positioned at the base of the housing and is configured to emit light onto the sample in the chamber **101** positioned in-line above the bright-field light source **104.** Between the chamber **101** and the bright-field light source **104** is a bright-field light beam narrowing device **105.** The beam narrowing device focuses the light emitted from the bright-field light source **104,** and directed the light onto the sample in the chamber **101.** Also positioned between the chamber **101** and the bright-field light source **104** is a movable light shutter **108.** The movable light shutter **108** is located above the bright-field light beam narrowing device **105** and below the chamber **101.** The light shutter **108** is connected to a mechanism for moving the shutter, such as a motor or a solenoid. The light shutter **108** is mechanically moved out of line with the bright-field light source **104** to allow the light from the bright-field light source **104** to interact with the sample in the chamber **101** during bright-field imaging. The light shutter **108** is mechanically moved in-line with the bright-field light source **104** to block the light from the bright-field light source **104** from interacting with the sample in the chamber **101** during fluorescent imaging.

After the light from the bright-field light source **104** passes through the sample in the chamber **101,** the light subsequently passes through the microscope objective **106.** The microscope objective **106** is responsible for primary image formation and is involved in determining quality of images that the system **100** is capable of producing. Microscope objective **106** is also involved in determining the magnification of a particular sample and the resolution under which fine sample detail can be observed in the system **100.** Microscope objectives are commercially available from Olympus America Inc. (Center Valley, PA). After the light from the bright-field light source **104** passes through the microscope objective **106,** the emitted light from the sample passes through a fluorescent filter assembly **110,** and the emitted light from the sample in the chamber **101** is acquired by the detection device **107.** The fluorescent filter assembly **110** is in-line with the bright-field light source **104,** the bright-field beam narrowing device **105,** the chamber **101,** the microscope objective **106,** and the detection device **107.** The fluorescent filter assembly **110** ensures that only emission light from the sample in the chamber **101** is imaged on the detection device **107.** An exemplary detection device is a CCD camera commercially available from Olympus America Inc. (Center Valley, PA). The image from the detection device **107** is transmitted to a computer **109** having analysis software **111.** The system further includes at least one fluorescent light source **102** for fluorescent imaging of the sample in the chamber **101.** When certain compounds are illuminated with high energy light (excitation light), they emit light of a different lower frequency. The fluorescent light source **102** is out of line with the bright-field light source **104,** the bright-field beam narrowing device **105,** the chamber **101,** the microscope objective **106,** and the detection device **107.** The fluorescent light source **102** emits excitation light through a fluorescent beam narrowing device **103** to the fluorescent filter assembly **110.** The fluorescent filter assembly **110** re-directs the excitation light from the fluorescent light source **102** to the sample in the chamber **101.** The excitation light illuminates the sample in the chamber **101,** and emitted light from the sample passes through the fluorescent filter **110** and is acquired by the detection device **107.** The fluorescent filter **110** ensures that only the excitation light from the fluorescent light source **102** illuminates the sample in the chamber **101,** and that only the emitted light from the sample in the chamber is imaged by the detection device **107.**

Even though FIG. 1 shows only one set of fluorescent light source, fluorescent beam narrowing device, and fluorescent filter assembly, two or more sets of fluorescent light source, fluorescent beam narrowing device, and fluorescent filter assembly can be used for fluorescence excitation and emission detection. With two or more sets of fluorescence excitation and emission available on the same sample, more than one fluorescent label may be used for advanced assays. During fluorescent detection, the light shutter **108** is mechanically moved in-line with the bright-field light source **104** to block the white light from the bright-field light source **104** from interacting with the sample in the chamber **101** during fluorescent imaging.

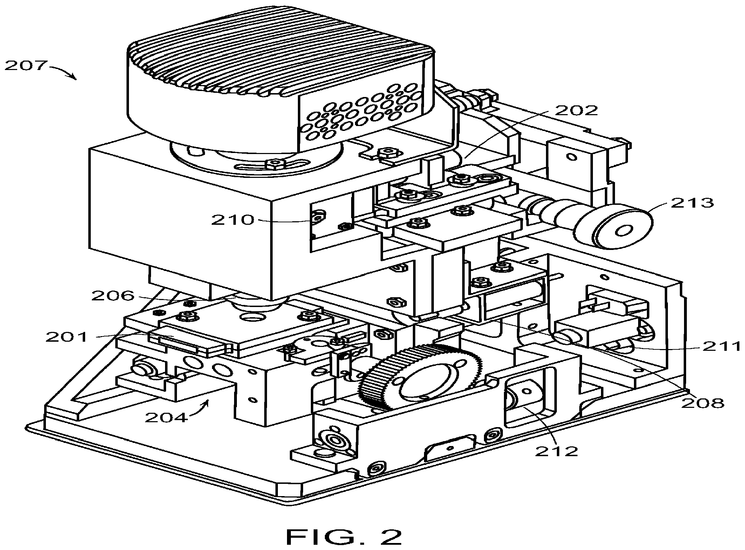

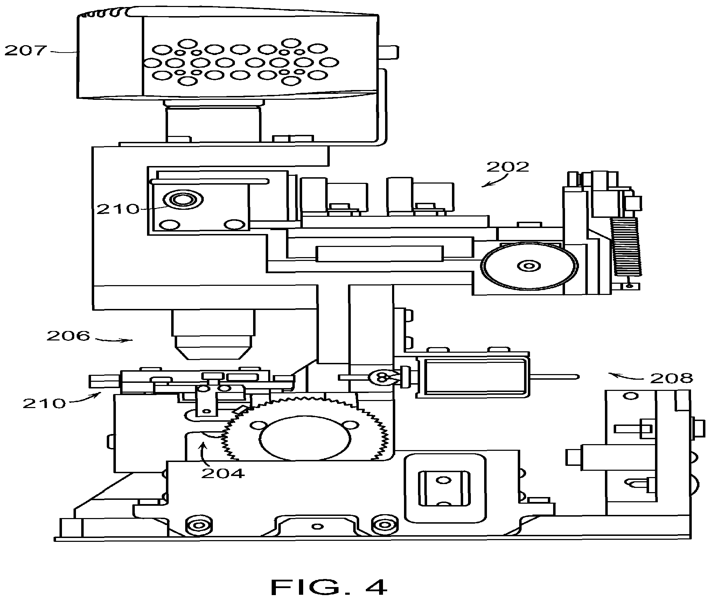

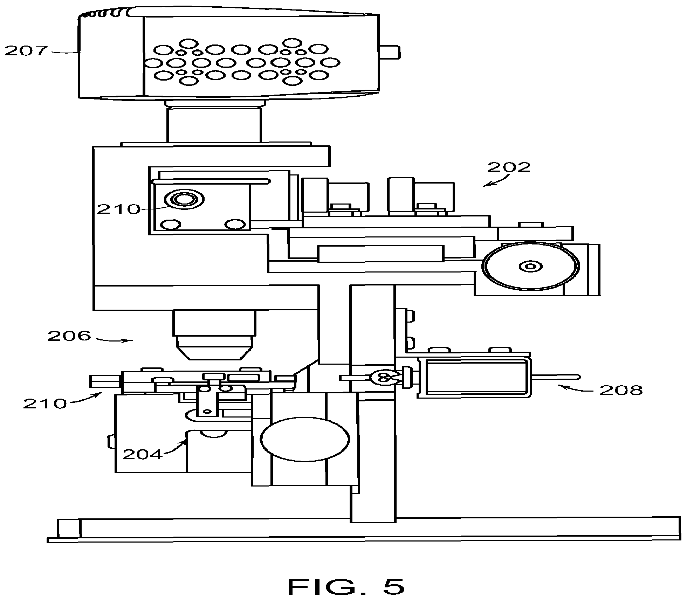

FIGs. 2-5 are drawings showing different views and component of the cell counting system of the invention with the housing removed. FIG. 2 shows a cell counting system **200.** The counting chamber **201** containing a sample is loaded into system **200.** The bright-field light source **204** and the bright-field beam narrowing device **205,** shown as a collimator, are shown positioned in-line and below the sample chamber **201.** The microscope objective **206** is shown positioned above the chamber **201** and in-line with the chamber **201,** bright-field light source **204,** and the bright-field beam narrowing device **205.** The fluorescent filter assembly **210** is shown positioned above the microscope objective **206** and in-line with the microscope objective **206,** the chamber **201,** the bright-field light source **204,** and the bright-field beam narrowing device **205.** The detection device **207,** shown as a CCD camera, is positioned above the fluorescent filter assembly **210,** and in-line with the fluorescent filter assembly **210,** the microscope objective **206,** the chamber **201,** the bright-field light source **204,** and the bright-field beam narrowing device **205.** FIG. 2 also shows the fluorescent light source **202** and the fluorescent beam narrowing device **203,** shown as a collimator. This figure shows that the fluorescent light source **202** and the fluorescent beam narrowing device **203** are out of line with the detection device **207,** the fluorescent filter assembly **210,** the microscope objective **206,** the chamber **201,** the bright-field light source **204,** and the bright-field beam narrowing device **205.** Fluorescent light source **202** is positioned to emit excitation light through the fluorescent beam narrowing device **203** and onto the fluorescent filter assembly **210.** FIG. 2 also shows the position of the movable light shutter **208** and the mechanism for moving the shutter, such as a motor or a solenoid, to which it is connected.

This figure further shows the outlet plug **211** for connecting the system **200** to an external power supply. Also shown is a focus adjustment device **212** for focusing the microscope objective **206.** The focusing device is shown as a wheel, and can be manually adjusted until optimal focusing of the cells or biomolecules in the sample. Also shown is a fluorescent channel switcher **213,** for switching fluorescent channels in embodiments in which two or more sets of fluorescent light source, fluorescent beam narrowing device, and fluorescent filter assembly are used for fluorescence excitation and emission detection. With two or more sets of fluorescence excitation and emission available on the same sample, more than one fluorescent label may be used for advanced assays.

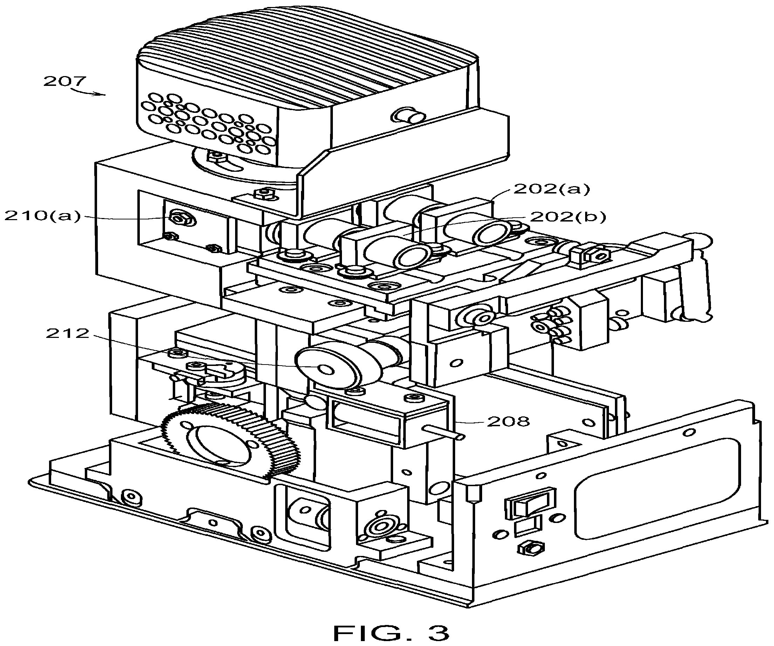

FIGs. 3-5 depict the system described in Figs. 1-2 from different orientations as shown in Figs. 1-2. In these views, the fluorescent light source **202** and the fluorescent beam narrowing device **203** are more easily seen. In this figure, the system **200** is shown with two sets of fluorescent light source, fluorescent beam narrowing device, and fluorescent filter assembly for fluorescence excitation and emission detection (**202(a)** and (**202(b)**). This view further depicts the alignment of the fluorescent light source **202** and the fluorescent beam narrowing device **203** with the fluorescent filter assembly **210.** Also shown is the fluorescent channel switcher **212** and the associated mechanics for selecting a set of fluorescent light source **202** and the fluorescent beam narrowing device **203.** Also shown in the detection device **207** and the movable light shutter **208** along with the mechanics for moving the light shutter.

The cell counting system described herein captures bright- field and fluorescent images of cells or biomolecules in the chamber, analyzes the number of cells or biomolecules, sizes and fluorescent intensity of each cell, and then converts this data to concentration, size and fluorescence histograms and scatter plots. The cell counting system of the invention is useful for various biological assays and other applications.

### Determining concentration or number count of cells that express a biomarker

Biomarkers are involved in cellular functions, cell proliferation, differentiation, migration, host defense, etc. Biomarkers can be cell surface biomarkers or can be intracellular biomarkers. Understanding and identifying biomarkers and quantifying the concentration of a biomarker in a population of cells will provide enormous opportunities for biomedical researchers to develop more effective therapeutic medicines to prevent, treat, and cure diseases. A biomarker can be any cell component present in a sample that is identifiable by known microscopic, histologic, or molecular biology techniques. Biomarkers can be used, for example, to distinguish neoplastic tissue from non-neoplastic tissue. Such markers can also be used to identify a molecular basis of a disease or disorder including a neoplastic disease or disorder. Such a biomarker can be, for example, a molecule present on a cell surface, an over-expressed target protein, a nucleic acid mutation or a morphological characteristic of a cell present in a sample. The method of the invention involves contacting a liquid sample including cells that express a biomarker with a fluorescently labeled agent that specifically binds the biomarker. If the biomarker is a cell surface biomarker, no further steps are required prior to contacting the sample with the fluorescently labeled agent. If the biomarker is an intracellular biomarker, cells of the sample can first be made permeable prior to contacting the cells with the fluorescently labeled agent.

A variety of agents are useful in determining and analyzing cellular molecules and mechanisms. Such agents include, for example, polynucleotides, polypeptides, small molecules, and/or antibodies useful in in situ screening assays for detecting molecules that specifically bind to a biomarker present in a sample. An agent can be detectably labeled such that the agent is detectable when bound or hybridized to its target biomarker or ligand. Detectably labeling any of the foregoing agents includes an enzymatic, fluorescent, or radionuclide label. Other reporter methods and labels are well known in the art.

An agent useful in the methods of the invention can be an antibody. Antibodies useful in the methods of the invention include intact polyclonal or monoclonal antibodies, as well as fragments thereof, such as Fab and F(ab')₂. For example, monoclonal antibodies are made from antigen containing fragments of a protein by methods well known to those skilled in the art (Kohler, et al., Nature, 256:495, 1975; and Harlow et al., Antibodies, Cold Spring Harbor Laboratory, pp. 93-117, 1988). Fluorescent molecules may be bound to an immunoglobulin either directly or indirectly by using an intermediate functional group. An agent useful in the methods of the invention can also be a nucleic acid molecule (e.g., an oligonucleotide or polynucleotide). For example, in situ nucleic acid hybridization techniques are well known in the art and can be used to identify a RNA or DNA biomarker present in a sample. Screening procedures that rely on nucleic acid hybridization make it possible to identify a biomarker from any sample, provided the appropriate oligonucleotide or polynucleotide agent is available. For example, oligonucleotide agents, which can correspond to a part of a sequence encoding a target polypeptide (e.g., a cancer marker comprising a polypeptide), can be synthesized chemically or designed through molecular biology techniques. The polynucleotide encoding the target polypeptide can be deduced from the genetic code, however, the degeneracy of the code must be taken into account. For such screening, hybridization is typically performed under in situ conditions known to those skilled in the art. A number of fluorescent labels are known in the art and include DAPI, Cy3, Cy3.5, Cy5, CyS.5, Cy7, umbelliferone, fluorescein, fluorescein isothiocyanate (FITC), rhodamine, dichlorotriazinylamine fluorescein, dansyl chloride or phycoerythrin. A fluorescent label should have distinguishable excitation and emission spectra. Where two or more fluorescent labels are used, they should have differing excitation and emission spectra that differ, respectively, by some minimal value (typically about 15-30 nm). The degree of difference will typically be determined by the types of filters being used in the process. Typical excitation and emission spectra for DAPI, FITC, Cy3, Cy3.5, Cy5, CyS.5, and Cy7 are provided below in table 1.

**Table 1**

| Fluorescent indicator | Excitation Peak | Emission Peak |
|---|---|---|
| DAPI | 350 | 450 |
| FITC | 490 | 520 |
| Cy3 | 550 | 570 |
| Cy3.5 | 580 | 595 |
| Cy5 | 650 | 670 |
| Cy5.5 | 680 | 700 |
| Cy7 | 755 | 780 |

Once labeled, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system.

The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability. A bright-field image of the population of cells in the sample is acquired using the counting system of the invention. The bright-field image provides a cell count for the total population of cells in the sample. The system is then switched to fluorescent mode and a fluorescent image of cells is acquired. Only cells that have been bound by the fluorescently labeled agent will be visible in this mode, and thus only fluorescently labeled cells will be imaged in this mode. The fluorescent image provides a cell count for the number of cells in the population that have been bound by the fluorescently labeled agent. Each of the bright-field image and the fluorescent image can be an image of the entire sample. Alternatively, each of the bright-field image and the fluorescent image can be an image of a portion of the sample. The concentration of the biomarker and cells that express the biomarker is then determined by comparing the total cell count obtained from the bright-field image to the cell count of fluorescently labeled cells obtained from the fluorescent image. Because the system utilizes a covered chamber having a fixed height, cell concentration can be determined from the cell count.

### Determining concentration or number count of stem cells in a population of cells

Stem cells have the remarkable potential to develop into many different cell types in the body. Serving as a sort of repair system for the body, they can theoretically divide without limit to replenish other cells as long as the person or animal is still alive. When a stem cell divides, each new cell has the potential to either remain a stem cell or become another type of cell with a more specialized function, such as a muscle cell, a red blood cell, or a brain cell.

Stem cells have provided enormous opportunities for biomedical researchers to develop more effective therapeutic medicines to prevent, treat, and cure various diseases, because these cells have the unique property of regenerating themselves for a long period of time and also have the remarkable potential to differentiate into different kinds of functional cells. Described herein is a method for determining a concentration of stem cells in a population of cells in a sample.

The method involves contacting a sample including stem cells with a fluorescently labeled agent that specifically binds the stem cells in the sample. Biomarkers specific to stem cells include TRA-1-81, TRA-1-60, Thy-1, SSEA-3, SSEA4, Oct-4, CD9, CD30, and alkaline phosphatase. The agent can be an antibody, a particle coated with the antibody, polypeptide, oligonucleotide, or polynucleotide that has been fluorescently labeled.

After the sample has been contacted with the fluorescently labeled agent, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system.

The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability. A bright-field image of the population of cells in the sample is acquired using the counting system of the invention. The bright-field image provides a cell count for the total population of cells in the sample. The system is then switched to fluorescent mode and a fluorescent image of cells is acquired. Only the stem cells that have been bound by the fluorescently labeled agent will be visible in this mode, and thus only stem cells will be imaged in this mode. The fluorescent image provides a cell count for the number of stem cells in the population of cells. Each of the bright-field image and the fluorescent image can be an image of the entire sample. Alternatively, each of the bright-field image and the fluorescent image can be an image of a portion of the sample.

The concentration of stem cells in the population of cells is then determined by comparing the total cell count obtained from the bright- field image to the cell count of stem cells obtained from the fluorescent image. Because the system utilizes a covered chamber having a fixed height, stem cell concentration can be determined from the cell count.

### Determining infection rates of malaria

Malaria is a vector-borne infectious disease caused by protozoan parasites. Malaria is one of the most common infectious diseases and an enormous public health problem. The disease is caused by protozoan parasites of the genus Plasmodium. Only four types of the plasmodium parasite can infect humans; the most serious forms of the disease are caused by Plasmodium falciparum and Plasmodium vivax, but other related species (Plasmodium ovale, Plasmodium malariae) can also affect humans. This group of human-pathogenic Plasmodium species is usually referred to as malaria parasites.

Usually, people get malaria by being bitten by an infective female Anopheles mosquito. Only Anopheles mosquitoes can transmit malaria, and they must have been infected through a previous blood meal taken on an infected person. When a mosquito bites an infected person, a small amount of blood is taken that contains microscopic malaria parasites. About one week later, when the mosquito takes its next blood meal, these parasites mix with the mosquito's saliva and are injected into the person being bitten. The parasites multiply within red blood cells, causing symptoms that include light-headedness, shortness of breath, tachycardia, fever, chills, nausea, flu-like illness, and, in severe cases, coma, and death. Systems as described herein can be used to provide a simple, quick, and reliable method to identify and characterize the malaria parasitic infection rate in red blood cells.

The method involves contacting a sample of red blood cells from a subject having malaria with a fluorescently labeled agent specific for the malaria parasites. Red blood cells do not contain nucleic acid (DNA or RNA), while the malaria parasites do contain nucleic acid. Because red blood cells do not contain nucleic acid, the fluorescently labeled agent should be a cell permeable nucleic acid selective fluorescent dye, such as acridine orange (commercially available from Fluka BioChemica, Buchs, Switzerland), that will label nucleic acid in the malaria parasites while not labeling non-infected red blood cells.

After the sample has been contacted with the fluorescently labeled agent, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system.

The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability.

A bright-field image of the population of red blood cells in the sample is acquired using the counting system of the invention. The bright- field image provides a cell count for the total population of red blood cells in the sample, i.e., infected red blood cells and non-infected red blood cells. The system is then switched to fluorescent mode and a fluorescent image of red blood cells is acquired. Only the red blood cells that have been infected with a malaria parasite will be visible in this mode, and thus only malaria infected red blood cells will be imaged in this mode. The fluorescent image provides a cell count for the number of malaria infected red blood cells in the population of red blood cells. Each of the bright- field image and the fluorescent image can be an image of the entire sample. Alternatively, each of the bright-field image and the fluorescent image can be an image of a portion of the sample.

The malaria infection rate in the population of red blood cells is then determined by comparing the total red blood cell count obtained from the bright-field image to the red blood cell count of malaria infected red blood cells obtained from the fluorescent image. Because the system utilizes a covered chamber having a fixed height, the malaria infection rate can be determined from the cell count.

### Identifying and counting adipocytes

Adipocytes are the cells that primarily compose adipose tissue, specialized in storing energy as fat. There are two types of adipose tissue, white adipose tissue and brown adipose tissue. White fat cells or monovacuolar cells contain a large lipid droplet surrounded by a layer of cytoplasm. The nucleus is flattened and located on the periphery. A typical fat cell is 0.1 mm in diameter with some being twice that size and others half that size. The fat stored is in a semiliquid state, and is composed primarily of triglycerides and cholesteryl ester. White fat cells secrete resistin, adiponectin, and leptin. Brown fat cells or plurivacuolar cells are polygonal in shape. Unlike white fat cells, these cells have considerable cytoplasm, with lipid droplets scattered throughout. The nucleus is round, and, although eccentrically located, it is not in the periphery of the cell. The brown color comes from the large quantity of mitochondria.

Characterization of adipocytes is generally done by light microscopy. Often it is impossible to distinguish adipocytes from lipid sphere background because they look the same. Systems of the invention can be used to provide a simple, quick, and reliable method to identify and characterize adipocytes.

The method involves contacting a sample including adipocytes with a fluorescently labeled agent that specifically binds the adipocytes. Lipid droplets do not contain nucleic acid (DNA or RNA), while the adipocytes do contain nucleic acid. Because lipid droplets do not contain nucleic acid, the fluorescently labeled agent should be a cell permeable nucleic acid selective fluorescent dye, such as acridine orange, that will label nucleic acid in the adipocytes while not effecting the lipid droplets.

After the sample has been contacted with the fluorescently labeled agent, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system.

The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability.

A bright- field image of the sample is acquired using the counting system of the invention. The bright-field image provides an image of adipocytes and lipid droplets in the sample. The system is then switched to fluorescent mode and a fluorescent image of adipocytes is acquired. Only the adipocytes will be visible in this mode, and thus only adipocytes will be imaged in this mode. The fluorescent image provides a cell count for the number of adipocytes in the sample. Each of the bright-field image and the fluorescent image can be an image of the entire sample. Alternatively, each of the bright-field image and the fluorescent image can be an image of a portion of the sample. The adipocytes are identified by comparing the bright-field image to the fluorescent image.

### Detecting a biomolecule in a sample

Systems of the invention can be used to provide a simple, quick, and reliable method to quantitatively profile biomolecules from biological samples, such as serum, cell culture supernatant, or cell lysis. Biomolecules include proteins, polynucleotides (e.g., DNA or RNA), organic material, and any combination of the foregoing.

The method involves contacting a sample with particles coated with a biotinylated antibody, and streptavidin coupled to a fluorescent indicator. Exemplary particle sizes include 5 µm, 10 µm, 15 µm, 20 µm, 25 µm, 30 µm, 35 µm, 40 µm, 45 µm, 50 µm. The particle can be composed of any material. Exemplary particles include gold particles, latex particles, glass particles, or magnetic particles. These particles can be coated with a biotinylated antibody that has specificity for the biomolecule of interest in the sample. Methods for coupling biotin to antibodies is well known in the art, see for example Stanley (Essentials in Immunology and serology, Delmar, pp. 152-153, 2002). Methods for coating particles with biotinylated antibodies is well known in the art, see for example Harlow et al., Antibodies, Cold Spring Harbor Laboratory, 1988).

Once the sample has been contacted with the particles coated with a biotinylated antibody, and streptavidin coupled to a fluorescent indicator, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system. The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability.

A bright- field image of the sample is acquired using the counting system of the invention. The bright-field image acts as a control, providing an image of particles and biomolecules bound to the biotinylated antibody particle / streptavidin coupled fluorescent indicator complex. The system is then switched to fluorescent mode and a fluorescent image of multiplex binding activity of the biomolecules to the biotinylated antibody particle / streptavidin coupled fluorescent indicator complex is acquired. The fluorescent image provides a count for the number of biomolecules bound to the biotinylated antibody particle / streptavidin coupled fluorescent indicator complex. Each of the bright-field image and the fluorescent image can be an image of the entire sample. Alternatively, each of the bright-field image and the fluorescent image can be an image of a portion of the sample. The biomolecules bound to the biotinylated antibody particle / streptavidin coupled fluorescent indicator complex are identified by comparing the bright-field image to the fluorescent image. The combination of bright-field imaging and fluorescent imaging allows for monitoring and control of the number of reaction particles to ensure consistent data.

### Determining concentration or number count of viable hepatocytes (not part of the present invention)

The liver consists of two main lobes, both of which are made up of thousands of lobules. The liver regulates most chemical levels in the blood and excretes a product called bile that helps carry away waste products from the liver. All blood leaving the stomach and intestines passes through the liver. The liver processes this blood and breaks down nutrients and drugs into forms that are easier to use for the rest of the body. More than 500 vital functions have been identified with the liver. Some of these functions include: production of bile; production of certain proteins for blood plasma; production of cholesterol and special proteins to help carry fats through the body; conversion of excess glucose into glycogen for storage; regulation of blood levels of amino acids; processing of hemoglobin for use of its iron content; conversion of poisonous ammonia to urea; clearing the blood of drugs and other poisonous substances; regulating blood clotting; and resisting infections by producing immune factors and removing bacteria from the blood stream.
There are many disorders of the liver that require clinical care by a physician or other healthcare professional. According to the American Liver Foundation, more than 15 million people in the United States suffer from liver diseases, and more than 43,000 die of a liver disease each year.

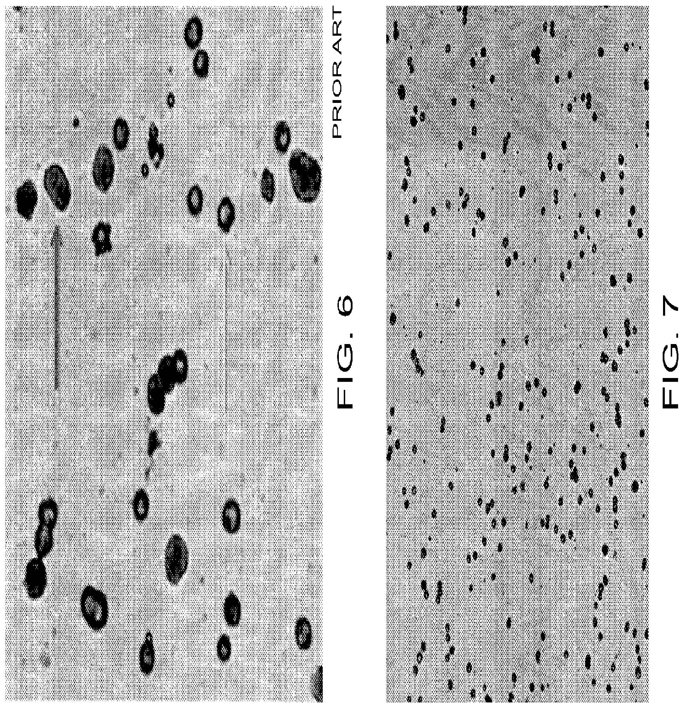

Currently, researchers stain primary hepatocytes with trypan blue and manually count dead cells and live cells under a microscope in a bright-field configuration. The viability of sample is calculated using manual counted live cells vs. trypan blue stained dead cells. As shown in FIG. 6, two populations were observed that represent live and dead cells with green and blue arrow respectively. There are technical difficulties with automation of the trypan blue viability test because of intracellular structures, inconsistencies of cell images, variations between species to species and sample to sample, and declustering. In addition, it has been reported that there are staining variations between different primary hepatocytes, such as species-to-species, sample-to-sample, and process-to-process. This variation makes the counting results inconsistent.

Systems as described herein provide a quick, simple, and reliable method for determining the concentration of viable hepatocytes cells in a population of hepatocytes in a sample. The concentration of viable hepatocytes cells in a population of hepatocytes in a sample can be correlated with a particular liver disease or disease state. The sample can include primary fresh hepatocytes, prior to cryopreservation. The sample can also include post-thaw hepatocytes, thawed post cryopreservation.

The method involves contacting a sample including hepatocytes with at least one fluorescently labeled agent. If two fluorescently labeled agents are used, the fluorescently labeled agents should have different fluorescence characteristics, i.e., different excitation wavelengths and different emission wavelengths. When two fluorescently labeled agents are used, one can be acridine orange and the other can be propidium iodine (PI). Using these tandem agents, acridine orange stains viable hepatocytes while PI stains dead hepatocytes. PI is commercially available from, for example, Fluka BioChemica (Buchs, Switzerland). PI is an intercalating agent that fluoresces when bound to DNA. PI is membrane impermeant and excluded from viable cells, thus PI is commonly used to identify and/or determine the amount of non-living cells in a mixed population.

Once the sample has been contacted with the fluorescently labeled agent, the sample is aspirated with a pipette and loaded into a chamber of the system. The chamber is loaded with a sample by pipetting the sample into the sample introduction port of the chamber. As the sample is loaded into the chamber, air escapes the chamber through the air escape port in the chamber. An exemplary sample size is 20 µl. Once the chamber is loaded with the sample, the chamber is loaded into the counting system through a slot in a housing of the system.

The cell sample in suspension within a cell counting chamber is illuminated by the bright field (BF) light source and the fluorescent (FL) light source. The light sources may be light emitting diodes. Collimators may be used for the light sources. A movable light shutter is used to block out bright field light when the system is used in fluorescent detection mode. A fluorescent light filter assembly is used to allow only the excitation light to illuminate the sample and to allow only the emission light from the sample to be imaged on the camera sensor. The camera may be a CCD camera with a thermoelectric cooling capability.

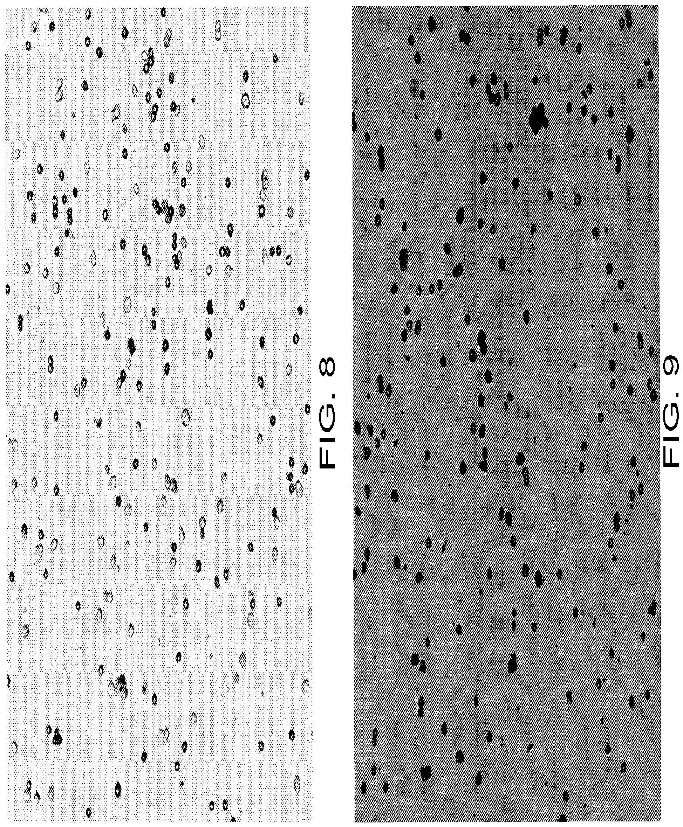

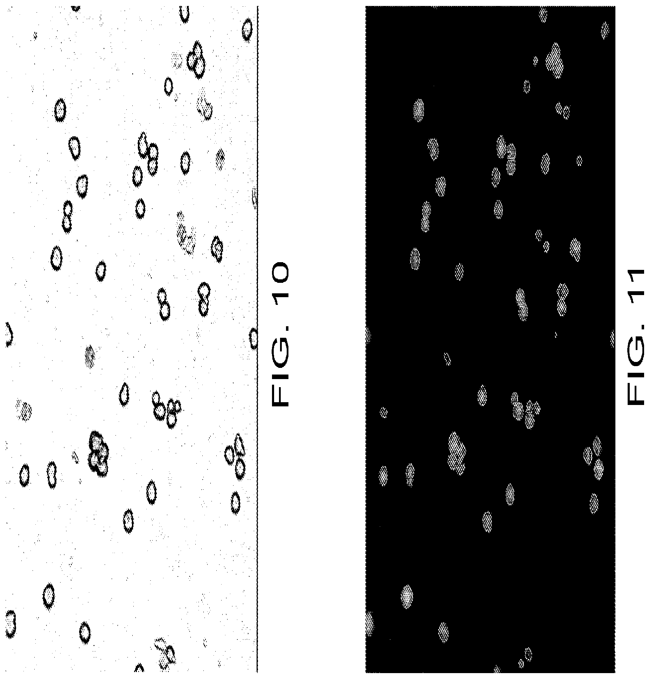

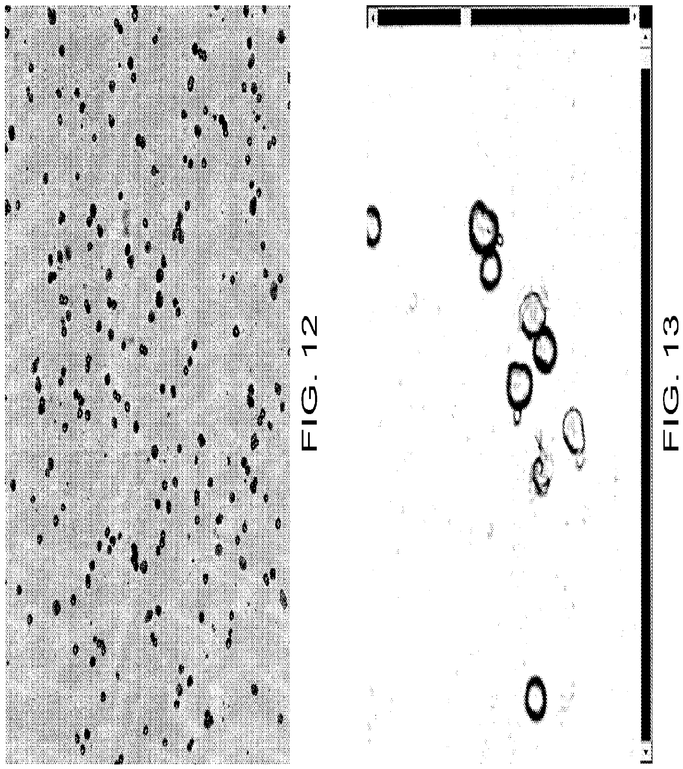

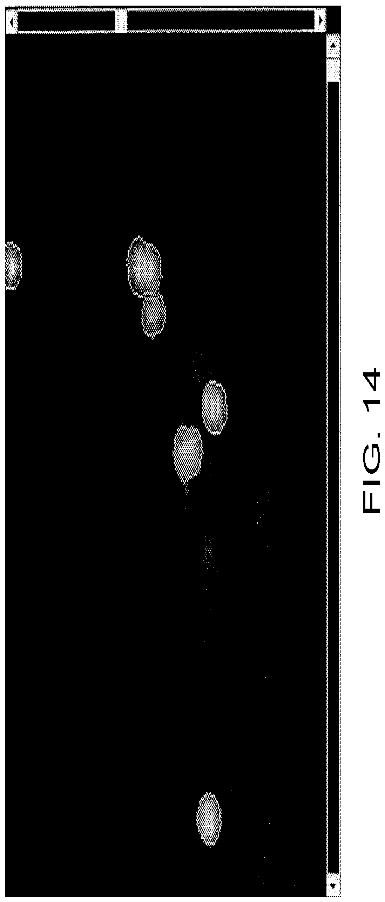

Two or more images of the sample are acquired using the counting system of the invention. The first and second image are selected from the group consisting of a bright-field image, a fluorescent image of viable hepatocytes, and a fluorescent image of dead hepatocytes, in which the first image is different from the second image. The bright-field image provides an image of the total cell count, i.e., viable and dead cells, of the population of hepatocytes. The system is then switched to fluorescent mode and fluorescent images are acquired. The first fluorescent image acquired by a first fluorescent channel of the counting system will be a fluorescent image of hepatocytes fluorescently labeled with acridine orange. This image provides a cell count of viable hepatocytes in the population of hepatocytes. The second fluorescent image acquired by a second fluorescent channel of the counting system will be a fluorescent image of hepatocytes labeled with PI. This image provides a cell count of dead hepatocytes in the population of hepatocytes. FIGs. 7-14 show hepatocytes stained with different fluorescent agents, e.g., acridine orange and PI, and imaged under different conditions, bright-field and two different fluorescent lights. Each of the bright-field image and the fluorescent images can be an image of the entire sample. Alternatively, each of the bright-field image and the fluorescent images can be an image of a portion of the sample.

The concentration of viable hepatocytes can then be determined by numerous counting methods. Because the system utilizes a covered chamber having a fixed height, cell concentration can be determined from the cell count. When the first image is the fluorescent image of live hepatocytes and the second image is the fluorescent image of dead hepatocytes, the concentration of viable hepatocytes in the population of hepatocytes is determined by comparing cell count from the fluorescent image of live hepatocytes to cell count from the fluorescent image of dead hepatocytes. Alternatively, when the first image is the bright-field image and the second image is the fluorescent image of dead hepatocytes, the concentration of viable hepatocytes in the population of hepatocytes is determined by comparing cell count from the bright-field image to cell count from the fluorescent image of dead hepatocytes. Alternatively, when the first image is the bright-field image and the second image is the fluorescent image of live hepatocytes, the concentration of viable hepatocytes in the population of hepatocytes is determined by comparing cell count from the bright-field image to cell count from the fluorescent image of live hepatocytes. Alternatively, three images can be acquired by the system, a bright- field image, a fluorescent image of viable hepatocytes, and a fluorescent image of dead hepatocytes. The bright-field image provides an image of the total cell count, i.e., viable and dead cells, of the population of hepatocytes. The fluorescent image of hepatocytes fluorescently labeled with acridine orange provides a cell count of viable hepatocytes in the population of hepatocytes. The fluorescent image of hepatocytes labeled with PI a cell count of dead hepatocytes in the population of hepatocytes. The concentration of viable hepatocytes can then be determined by comparing the cell count from bright-field image with the cell count from the two fluorescent images.

## Claims

1. A system for counting cells (100; 200) or biomolecules comprising:
a covered sample chamber (101; 201) having a known height and configured to hold a suspension of biomolecules or cells in a liquid sample;
at least one fluorescent light source (102; 202) connected to at least one fluorescent light beam narrowing device (103; 203);
a bright-field light source (104; 204) connected to a bright-field light beam narrowing device (105; 205), wherein the bright-field light beam narrowing device (105; 205) is positioned between the sample chamber (101; 201) and the bright-field light source (104; 204), and wherein the bright-field light source (104; 204) is configured to emit light onto the liquid sample in the sample chamber (101; 201) positioned in-line above the bright-field light source (104; 204);
a microscope objective (106; 206);
a detection device (107; 207);
a fluorescent filter assembly (110; 210) to allow excitation light from the fluorescent light source (102; 202) to illuminate the sample but not to illuminate the detection device (107; 207), and allow emission light from the sample to be imaged by the detection device (107; 207), wherein the fluorescent filter assembly (110; 210) is positioned in-line with the bright-field light source (104; 204), the bright-field beam narrowing device (105; 205), the sample chamber (101; 201), the microscopic objective (106; 206) and the detection device (107; 207); and
a movable light shutter (108; 208), positioned between the sample chamber (101; 201) and the bright-field light source (104; 204), to block bright-field light during fluorescent detection,
wherein
the fluorescent light source (102; 202) and the detection device (107; 207) are both located on the opposite side of the sample chamber (101; 201) with regard to the bright-field light source (104; 204); and
the volume of the covered sample chamber (101; 201) under interrogation by the fluorescent and bright-field lights is known for each image taken.

2. The system (100; 200) according to claim 1, wherein the system (100; 200) is configured to capture entirety of the sample with a single image.

3. The system (100; 200) according to claim 1, wherein the system (100; 200) is configured to capture a portion of the sample with a single image.

4. A method for determining a number count of cells that express a biomarker in a population of cells in a sample, said method using the system (100; 200) of any one of claims 1-3, comprising:
contacting a liquid sample comprising cells that express a biomarker with a fluorescently labeled agent that specifically binds the biomarker;
loading the liquid sample into the covered sample chamber (101; 201), wherein the population of cells is suspended within the sample chamber (101; 201);
acquiring a single static bright-field image of the population of cells in the sample in the known volume of the liquid sample in the sample chamber (101; 201);
acquiring a single static fluorescent image of the population of cells with the fluorescently labeled agent bound thereto in the known volume of the liquid sample in the sample chamber (101; 201); and
analyzing the single static bright-field image to obtain a cell count for the total population of cells in the known volume of the liquid sample;
analyzing the single static fluorescent image to obtain a cell count for the number of cells in the known volume of the liquid sample that have been bound by the fluorescently labeled agent; and
comparing the total cell count obtained from the single static bright-field image to the cell count of the fluorescently labeled cells obtained from the single static fluorescent image.

5. The method according to claim 4, wherein each of the single static bright-field image and the single static fluorescent image is an image of the entire sample.

6. The method according to claim 4, wherein each of the single static bright-field image and the single static fluorescent image is an image of a portion of the sample.

## Patentansprüche

1. System zum Zählen von Zellen (100; 200) oder Biomolekülen, umfassend:
eine abgedeckte Probenkammer (101; 201) mit einer bekannten Höhe, die zur Aufnahme einer Suspension von Biomolekülen oder Zellen in einer flüssigen Probe konfiguriert ist;
mindestens eine Fluoreszenzlichtquelle (102; 202), die mit mindestens einer Vorrichtung zur Einengung des Fluoreszenzlichtstrahls (103; 203) verbunden ist;
eine Hellfeldlichtquelle (104; 204), die mit einer Vorrichtung zur Einengung des Hellfeldlichtstrahls (105; 205) verbunden ist, wobei die Vorrichtung zur Einengung des Hellfeldlichtstrahls (105; 205) zwischen der Probenkammer (101; 201) und der Hellfeldlichtquelle (104; 204) positioniert ist und wobei die Hellfeldlichtquelle (104; 204) so konfiguriert ist, dass sie Licht auf die flüssige Probe in der Probenkammer (101; 201) emittiert, die in einer Linie über der Hellfeldlichtquelle (104; 204) positioniert ist; ein Mikroskopobjektiv (106; 206);
eine Detektionsvorrichtung (107; 207);
eine Fluoreszenzfilteranordnung (110; 210), um zu ermöglichen, dass Anregungslicht von der Fluoreszenzlichtquelle (102; 202) die Probe beleuchtet, aber nicht die Detektionsvorrichtung (107; 207) beleuchtet, und um zu ermöglichen, dass Emissionslicht von der Probe durch die Detektionsvorrichtung (107; 207) abgebildet wird, wobei die Fluoreszenzfilteranordnung (110; 210) in einer Linie mit der Hellfeldlichtquelle (104; 204), der Vorrichtung zur Einengung des Hellfeldlichtstrahls (105; 205), der Probenkammer (101; 201), dem Mikroskopobjektiv (106; 206) und der Detektionsvorrichtung (107; 207) angeordnet ist; und
eine bewegliche Lichtblende (108; 208), die zwischen der Probenkammer (101; 201) und der Hellfeldlichtquelle (104; 204) angeordnet ist, um Hellfeldlicht während der Fluoreszenzdetektion zu blockieren,
wobei
die Fluoreszenzlichtquelle (102; 202) und die Detektionsvorrichtung (107; 207) beide auf der gegenüberliegenden Seite der Probenkammer (101; 201) in Bezug auf die Hellfeldlichtquelle (104; 204) angeordnet sind; und
das Volumen der abgedeckten Probenkammer (101; 201), die von den Fluoreszenz- und Hellfeldleuchten beleuchtet wird, für jedes aufgenommene Bild bekannt ist.

2. System (100; 200) nach Anspruch 1, wobei das System (100; 200) so konfiguriert ist, dass es die gesamte Probe mit einem einzigen Bild erfasst.

3. System (100; 200) nach Anspruch 1, wobei das System (100; 200) so konfiguriert ist, dass es einen Teil der Probe mit einem einzigen Bild erfasst.

4. Verfahren zur Bestimmung der Anzahl von Zellen, die einen Biomarker in einer Zellpopulation in einer Probe exprimieren, wobei das Verfahren das System (100; 200) nach einem der Ansprüche 1 bis 3 verwendet, umfassend:
Inkontaktbringen einer flüssigen Probe, die Zellen enthält, die einen Biomarker exprimieren, mit einem fluoreszensmarkierten Mittel, das den Biomarker spezifisch bindet;
Laden der flüssigen Probe in die abgedeckte Probenkammer (101; 201), wobei die Zellpopulation innerhalb der Probenkammer (101; 201) suspendiert ist;
Erfassen eines einzelnen statischen Hellfeldbildes der Zellpopulation in der Probe in dem bekannten Volumen der flüssigen Probe in der Probenkammer (101; 201);
Erfassen eines einzelnen statischen Fluoreszenzbildes der Zellpopulation mit dem daran gebundenen fluoreszensmarkierten Mittel in dem bekannten Volumen der flüssigen Probe in der Probenkammer (101; 201); und
Analysieren des einzelnen statischen Hellfeldbildes, um eine Zellzahl für die Gesamtpopulation von Zellen in dem bekannten Volumen der flüssigen Probe zu erhalten;
Analysieren des einzelnen statischen Fluoreszenzbildes, um eine Zellzahl für die Anzahl der Zellen in dem bekannten Volumen der flüssigen Probe zu erhalten, die durch das fluoreszenzmarkierte Mittel gebunden worden sind; und
Vergleichen der Gesamtzellzahl, die aus dem einzelnen statischen Hellfeldbild erhalten wurde, mit der Zellzahl der fluoreszenzmarkierten Zellen, die aus dem einzelnen statischen Fluoreszenzbild erhalten wurde.

5. Verfahren nach Anspruch 4, wobei sowohl das einzelne statische Hellfeldbild als auch das einzelne statische Fluoreszenzbild ein Bild der gesamten Probe ist.

6. Verfahren nach Anspruch 4, wobei sowohl das einzelne statische Hellfeldbild als auch das einzelne statische Fluoreszenzbild ein Bild eines Teils der Probe ist.

## Revendications

1. Système pour dénombrer des cellules (100 ; 200 ou des biomolécules comportant :
une chambre d'échantillon couverte (101 ; 201) ayant une hauteur connue et configurée pour contenir une suspension de biomolécules ou de cellules dans un échantillon liquide ;
au moins une source de lumière fluorescente (102 ; 202) reliée à au moins un dispositif de rétrécissement de faisceau de lumière fluorescente (103 ; 203) ;
une source de lumière de fond clair (104 ; 204) reliée à un dispositif de rétrécissement de faisceau de lumière de fond clair (105 ; 205), dans lequel le dispositif de rétrécissement de faisceau de lumière de fond clair (105 ; 205) est positionné entre la chambre d'échantillon (101 ; 201) et la source de lumière de fond clair (104 ; 204), et dans lequel la source de lumière de fond clair (104 ; 204) est configurée pour émettre de la lumière sur l'échantillon liquide dans la chambre d'échantillon (101 ; 201) positionnée en ligne au-dessus de la source de lumière de fond clair (104 ; 204) ;
un objectif de microscope (106 ; 206) ;
un dispositif de détection (107 ; 207) ;
un ensemble de filtres fluorescents (110 ; 210) pour permettre à la lumière d'excitation provenant de la source de lumière fluorescente (102 ; 202) d'éclairer l'échantillon mais de ne pas éclairer le dispositif de détection (107 ; 207), et permettre à la lumière d'émission provenant de l'échantillon à reproduire en image par le dispositif de détection (107 ; 207), dans lequel l'ensemble de filtres fluorescents (110; 210) est positionné en ligne avec la source de lumière de fond clair (104 ; 204), le dispositif de rétrécissement de faisceau de fond clair (105 ; 205), la chambre d'échantillon (101 ; 201), l'objectif de microscope (106 ; 206) et le dispositif de détection (107 ; 207) ; et
un obturateur de lumière mobile (108 ; 208), positionné entre la chambre d'échantillon (101 ; 201) et la source de lumière de fond clair (104 ; 204), pour bloquer la lumière de fond clair pendant une détection par fluorescence,
dans lequel
la source de lumière fluorescente (102 ; 202) et le dispositif de détection (107 ; 207) sont tous deux situés sur le côté opposé de la chambre d'échantillon (101 ; 201) par rapport à la source de lumière de fond clair (104 ; 204) ; et
le volume de la chambre d'échantillon couverte (101 ; 201) sous interrogation par les lumières fluorescente et de fond clair est connu pour chaque image prise.

2. Système (100 ; 200) selon la revendication 1, dans lequel le système (100 ; 200) est configuré pour capturer la totalité de l'échantillon avec une seule image.

3. Système (100 ; 200) selon la revendication 1, dans lequel le système (100 ; 200) est configuré pour capturer une portion de l'échantillon avec une seule image.

4. Procédé pour déterminer un dénombrement de cellules qui expriment un biomarqueur dans une population de cellules dans un échantillon, ledit procédé utilisant le système (100 ; 200) de l'une quelconque des revendications 1 à 3, comportant les étapes consistant à :
mettre en contact un échantillon liquide comportant des cellules qui expriment un biomarqueur avec un agent marqué par fluorescence qui se lie spécifiquement au biomarqueur ;
charger l'échantillon liquide dans la chambre d'échantillon couverte (101 ; 201), dans lequel la population de cellules est mise en suspension à l'intérieur de la chambre d'échantillon (101 ; 201) ;
acquérir une seule image sur fond clair statique de la population de cellules dans l'échantillon dans le volume connu de l'échantillon liquide dans la chambre d'échantillon (101 ; 201) ;
acquérir une seule image fluorescente statique de la population de cellules avec l'agent marqué par fluorescence lié à celles-ci dans le volume connu de l'échantillon liquide dans la chambre d'échantillon (101 ; 201) ; et
analyser la seule image sur fond clair statique pour obtenir un dénombrement de cellules pour la population totale de cellules dans le volume connu de l'échantillon liquide ;
analyser la seule image fluorescente statique pour obtenir un dénombrement de cellules pour le nombre de cellules dans le volume connu de l'échantillon liquide qui ont été liées par l'agent marqué par fluorescence ; et
comparer le dénombrement total de cellules obtenu à partir de la seule image sur fond clair statique au dénombrement de cellules des cellules marquées par fluorescence obtenu à partir de la seule image fluorescente statique.

5. Procédé selon la revendication 4, dans lequel chaque image parmi la seule image sur fond clair statique et la seule image fluorescente statique est une image de l'échantillon complet.

6. Procédé selon la revendication 4, dans lequel chaque image parmi la seule image sur fond clair statique et la seule image fluorescente statique est une image d'une portion de l'échantillon.
